(19) **Europäisches Patentamt**

**European Patent Office**

**Office européen des brevets**

(11) **EP 4 748 528 A1**

(12) **EUROPEAN PATENT APPLICATION**

(43) Date of publication:
27.05.2026 Bulletin 2026/22

(21) Application number: 25214935.6

(22) Date of filing: 11.11.2025

(51) International Patent Classification (IPC):
B23K 20/10 (2006.01)   H01M 50/103 (2021.01)
H01M 50/105 (2021.01)   H01M 50/566 (2021.01)
B23K 20/26 (2006.01)   H01M 50/536 (2021.01)

(52) Cooperative Patent Classification (CPC):
B23K 20/10; B23K 20/103; B23K 20/26;
H01M 50/536; B23K 2101/36

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 25.11.2024  IT 202400026448
25.11.2024  IT 202400026454

(71) Applicant: Fameccanica.Data S.p.A.
66020 San Giovanni Teatino (CH) (IT)

(72) Inventors:
• LUPINETTI, Serafino
I-66020 San Giovanni Teatino (Chieti) (IT)
• GUALTIERI, Diego
I-66020 San Giovanni Teatino (Chieti) (IT)

(74) Representative: Buzzi, Notaro & Antonielli d'Oulx
S.p.A.
Corso Vittorio Emanuele II, 6
10123 Torino (IT)

(54) **APPARATUS AND METHOD FOR WELDING SINGLE CELLS FOR THE PRODUCTION OF ELECTRICAL ENERGY STORAGE DEVICES**

(57)    A welding apparatus for welding single cells (150) stacked together to define a conductive cell (100) for the production of electrical energy storage devices, each single cell (150) comprising at least one first electrode (101), a second electrode (102) and at least one separator film (103) interposed between the first and second electrode (101, 102), the apparatus (10) comprises at least one first ultrasonic welding member (11) and a second ultrasonic welding member (12), each configured to emit ultrasound in counterphase relative to the other.

fig. 3

EP 4 748 528 A1

## Description

Field of the invention

The present invention relates to an apparatus and the related method for welding together a predetermined number of conductive single cells, the latter being stacked one on top of the other to define a cell for the production of electrical energy storage devices, or batteries. In particular, the welding results in the irreversible consolidation of the anodes and cathodes of the individual stacked single cells so as to make them available for common electrical connection to respective utilization circuits.

Prior art

Plants for the production of conductive single cells intended for stacking to define cells used, typically, for the production of electrical energy storage devices, or batteries, such as those known as prismatic or "pouch" batteries, are known.

Briefly, conductive single cells are substantially composed of a sandwich of layers defined by a first electrode, or anode, containing a coating of suitable pressed powder materials on both sides of a laminated support made of conductive material, such as copper (Cu), a second electrode, or cathode, also containing a coating of suitable pressed powder materials on both sides of a laminated support made of conductive material, such as aluminum (Al), and at least one insulating separator film made of porous dielectric material, for example paper or polymer, interposed between the first and second electrode and on an outer side of one of said electrodes.

The single cells thus composed are operatively stacked together to define a conductive cell, which will be part of the storage battery being produced.

Furthermore, it is known that each first electrode and each second electrode have a shape, for example quadrangular, not necessarily equivalent, and each includes its own protruding tab, extending laterally in a staggered position between the first and second electrode. In this way, in the stacked condition of the electrodes, the protruding tabs of the same electrode are stacked one on top of the other.

In this condition, the protruding tabs of the first electrodes, as well as the protruding tabs of the second electrodes, are welded together and to respective support plates made of coordinated material, to form stable groupings of respective tabs, functioning as positive cathode or negative anode connection poles of the battery pack thus formed.

To date, the use of ultrasonic technology is particularly widespread for welding the anode tabs and cathode tabs together, proceeding with a first step of tab coupling (pre-welding) and a second step of irreversible consolidation of the coupled tabs to the respective support plate (final-welding).

Less widespread methods are also known, in which the final-welding is performed by spot laser welding. The limited diffusion of this technology is mainly due to the fact that this technology requires high clamping pressures of the tabs, in the absence of which air passes between the tabs, resulting in unsatisfactory mechanical consistency of the weld, with consequent limited efficiency of electrical conductivity and guarantee of a correct weld.

In the most widespread solutions, i.e., those involving ultrasonic technology for both steps, welding apparatuses are used equipped with two opposing welding elements, namely a linear sonotrode and a fixed support, also known by the term "anvil", both provided with a surface pattern that amplifies the welding conditions. The tabs and the connection plate are positioned overlapping in an intermediate position between the linear sonotrode and the anvil, so as to be subjected to mechanical/sonic clamping between the two.

In the known solutions, when the welding energy required by the process falls within the power limits provided by the considered ultrasonic system, i.e., when it is desired to weld groupings of anode tabs and cathode tabs adequately composed in the number of layers, both phases (pre-welding and final-welding) can be performed with the same technology on successive process stations.

Under these operating conditions, the sonotrode is duly excited to be brought into vibration and generate a desired quantity of welding energy Ew. The tabs are clamped with appropriate force-pressure values and maintained in the intermediate condition between the linear sonotrode and the anvil, for a time congruent with the transfer of the sonic welding energy Ew necessary to achieve an effective weld in compliance with the relation:

$$Ew = Pac \times tw$$

where Pac is the acoustic power of the system and tw is the operating time necessary to guarantee an adequate value of the produced weld strength.

Typically, low-frequency systems are used, variable between approximately 20kHz and approximately 30-35 kHz, and high amplitude values variable between approximately $40\mu m$ and approximately 80um, with high Pac powers close to the collapse limit of the converter that powers the sonotrode, i.e., between approximately 4000W and approximately 6000W.

The high use of power Pac, particularly for the final-welding process, is necessary to guarantee the complete penetration of the welding energy Ew emitted by the sonotrode through all the tabs and the support plate, in order to obtain the desired effectiveness of the performed weld.

In this way, however, much sonic/mechanical welding energy Ew is transferred to the electrodes in a nonuniform/non-homogeneous manner and, due to the high-frequency vibrations, the compaction consistency of the powder coatings of the electrodes may degrade, causing rapid material degradation and, consequently, undesirable overheating of the entire battery pack.

Furthermore, the substantially complete use of the available Pac power defines a limit number of electrode tabs that can be mutually consolidated, limiting the types and sizes of storage batteries that can be produced.

An additional drawback of the use of known technologies refers to the need to provide a predetermined operating time tw, in which each battery pack is kept stationary for welding, both the cathode and the anode, or vice versa.

In fact, even considering welding apparatuses with sufficient available powers and forces, and the best operating conditions, in relation to a limited number of overlapping tabs (e.g., 30-40 medium-thickness tabs plus the support plate), cycle times typically do not fall below 0.5 seconds. However, these necessary timings constitute a bottleneck in the overall productivity of the plant in which the welding apparatus is installed, requiring, in some cases, a slowdown in the feeding of single cells or other costly or limiting solutions.

It is clear that such a drawback negatively affects the economics of plant management.

Further drawbacks are related to the metallic contamination induced by the anode tabs and cathode tabs, or vice versa, when subjected in succession to the action of subsequent welding by the same sonotrode and the same fixed support. Indeed, also due to the high powers required, with consequent high quantities of energy employed, the excessive overheating of the tabs causes a progressive deposit of copper and aluminum, particularly on the respective geometric motifs, or patterns, provided on the operating surfaces of the anvil and sonotrode, which then occludes the pattern cavities and accidentally deposits or interposes on the products, compromising their efficiency in the welding phases.

There is therefore a need to perfect an apparatus, and a related method, for welding single cells for the production of electrical energy storage devices, which can overcome at least one of the drawbacks of the prior art.

To do this, it is necessary to solve the technical problem of performing an effective weld of the single-cell tabs in limited times and optimizing the use of the necessary sonic energy.

Object and summary of the invention

The object of the present invention is to realize an apparatus and develop a method for welding single cells, in which, while guaranteeing effective penetration of the emitted sonic energy through all the tabs and the support plate, the possible degradation of the electrodes is minimized, also limiting the overheating of the entire battery pack.

Another object of the present invention is to realize an apparatus for welding single cells in which a contained and minimal operating time can be provided, such as to minimally impact the productivity of a plant in which such an apparatus can be installed.

A further object of the present invention is to realize an apparatus for welding single cells, wherein possible metallic contamination on the patterns of the sonic groups and thus on the anode tabs and cathode tabs, or vice versa, when subjected in succession to subsequent welding action, can be substantially reduced.

To overcome the drawbacks of the prior art and to achieve these and further objects and advantages, the Applicant has studied, tested and realized the present invention.

According to the present invention, said object is achieved by an apparatus having the features forming the subject of claim 1.

According to another aspect, the invention relates to a method for welding single cells having the features forming the subject of claim 9.

Preferred embodiments of the invention form the subject of the dependent claims.

The claims form an integral part of the teaching provided in relation to the invention.

Brief description of the drawings

The present invention will now be described in detail with reference to the accompanying drawings, given purely by way of non-limiting example, wherein:

- Figure 1 schematically illustrates a stack of single cells welded with a welding apparatus according to the present invention,
- Figure 2 partially illustrates a first embodiment of a welding apparatus according to the present invention;
- Fig. 2a schematically illustrates the energy action of the embodiment of Fig. 2;
- Fig. 3 partially illustrates a second embodiment of a welding apparatus according to the present invention;
- Fig. 3a schematically illustrates the energy action of the embodiment of Fig. 3;
- Fig. 4a illustrates an enlarged detail of the apparatus of Fig. 2 or Fig. 3, in a first embodiment;
- Fig. 4b illustrates an enlarged detail of the apparatus of Fig. 2 or Fig. 3, in a second embodiment;
- Fig. 5 shows the phase graphs during welding performed with the apparatus according to the present invention;
- Fig. 6 partially illustrates a first variant of the welding apparatus according to the present invention;
- Fig. 7 illustrates a combined embodiment between the welding apparatus of Fig. 3 and the variant of Fig. 6;

- Fig. 8 partially illustrates a detail of the welding apparatus of Fig. 2;
- Fig. 9 partially illustrates a detail of the welding apparatus of Fig. 3;
- Fig. 10 schematically illustrates a first embodiment of an operational detail of the welding apparatus according to the present invention in the first variant of Fig. 6;
- Fig. 11 schematically illustrates a first embodiment of an operational detail of the welding apparatus according to the present invention in the first variant of Fig. 6;
- Fig. 12 schematically illustrates a control device applied to a first embodiment of a welding apparatus;
- Fig. 13 schematically illustrates a control device applied to a second embodiment of a welding apparatus; and
- Fig. 14 schematically illustrates a control device applied to a third embodiment of a welding apparatus.

It will be appreciated that the accompanying drawings are schematic and that some components may not be shown to simplify understanding of the figures.

Detailed description

The present invention is expressed and characterized in the independent claims. The dependent claims disclose other features of the present invention or variants of the main solution idea.

In accordance with said objects, and to solve said technical problem in a new and original manner, also obtaining considerable advantages over the prior art, an apparatus according to the present invention is configured for welding a plurality of single cells stacked together to define a conductive cell. Each single cell comprises at least one first electrode, or anode, having a laminated copper support, a second electrode, or cathode, having a laminated aluminum support, and at least one separator film, made of dielectric or insulating material, interposed between the first and second electrode and on an outer side of one of said electrodes.

Each electrode comprises at least one respective tab made of copper or aluminum, which protrudes from the respective electrode and is staggered relative to the tab of the other electrode.

Such cells may, for example, be of the type defined by at least one pair of stacked single cells, each composed of a first separator layer, the anode, another separator layer and the cathode, to define a stack for the production of an electrical energy storage device, such as a prismatic battery, "pouch" or similar. In this way, the respective tabs of the individual electrodes are also stacked together by type to form respective tab stacks.

Within the spirit of the present invention, it is envisaged that the tab stacks of the same type provide for the composition and, therefore, the mutual welding both of the respective tabs of the individual electrodes together, and relative to a respective support plate of coordinated material which will represent, in use, the positive cathode or negative anode connection pole of the battery pack thus formed.

The apparatus according to the present invention comprises at least one first ultrasonic welding member and one second ultrasonic welding member, operatively arranged in opposition to each other, relative to the tabs of the same type to be welded, possibly with the respective support plate, and configured, each, to emit ultrasound with synchronous frequency and in counterphase.

In this way, by using two opposing ultrasonic welding members, it is possible to transfer a quantity of sonic/mechanical welding energy Ew, which is substantially double compared to traditional systems that act from one side only.

Moreover, the synchronous and counterphase action of the two ultrasonic welding members allows both to instantaneously achieve simultaneous rubbing between the interposed raw materials, and to avoid resonance phenomena between the two, while at the same time ensuring maximum sliding amplitude between the materials to be welded together.

The solution according to the present invention thus also allows reducing the times required for welding, to the advantage of the productivity of a plant in which such apparatus can be installed.

With the present invention, it is therefore possible to perform effective welding of the single-cell tabs in limited times while optimizing the use of the necessary sonic energy.

With the solution according to the present invention, at least the advantage is obtained, for the same thickness of the tab stack to be welded, of being able to use substantially half the acoustic power Pac for each welding member compared to traditional solutions. Indeed, with the solution according to the present invention, it is possible to generate, at least theoretically, a sonic/mechanical welding energy Ew that is about half that used in traditional systems, since it is sufficient for each welding member to produce an energy Ew capable of penetrating half the overall thickness of the tab stack.

This advantage allows, while ensuring effective penetration of the emitted sonic energy through the entire tab stack and the support plate, to minimize possible deterioration of the metal tabs and degradation of the coating on the electrodes, also limiting overheating of the entire battery pack.

This advantage also allows an increase in the upper limit of the number of tabs that can form the tab stack subjected to welding, potentially increasing the types of batteries that can be produced.

Moreover, with the solution according to the present invention, it is possible to perform welding of the tab stack also following the pre-welding and final-welding technique, still using ultrasonic welding, but with optimized management of the sonic welding energy Ew, as well as the possibility of welding enlarged tab stacks with the same welding energy Ew emitted by each ultrasonic welding member; complete welding can also be performed in a single welding phase.

A further advantage of the solution according to the present invention is that it also allows modulating the power intensity independently on both sides as a function of the density, type and grammage of the materials to be welded, a function necessary where, on one side, there is the metal connection plate with a thickness ranging from about 1mm to about 4 to 5mm and, on the other, the tab stack which will have a different overall density and thickness.

According to another aspect of the present invention, in one of the possible embodiments the first welding member comprises a first sonotrode which may be, depending on design choices, of rotary type or linear type. According to a variant, also, or alternatively, the second welding member comprises a second sonotrode which, here too, may be selected between a rotary type or linear type.

This solution of the present invention, in addition to ensuring better energy diffusion, also proves advantageous in terms of process stability, since the sonotrodes rotate at a peripheral speed equal to that of the tab stack advancement, reducing the amount of energy employed by virtue of the decrease in the active welding area. This solution also enables the possibility of performing substantially continuous welding of the tab stack, which can be fed or moved by the simultaneous and opposite rotation of the two opposing rotary sonotrodes.

This type of solution minimizes the time required for correct and effective welding of the tab stacks, substantially without interrupting cell feeding. The considerable advantage in terms of productivity and economic impact of the apparatus according to the present invention compared to a production plant where it is installed is self-evident.

According to some embodiments, the first welding member may comprise a first linear sonotrode, just as the second welding member may also comprise a second linear sonotrode. This solution can be combined with the rotary sonotrode solution to define hybrid solutions, i.e., combinations between rotary or linear sonotrodes.

According to another aspect of the present invention, at least the first welding member, whether a rotary or fixed linear sonotrode, comprises at least one first welding surface, which is arranged in contact and under pressure relative to the metal connection plate or the respective tab stack, and comprises a knurled surface conformation or inclined linear segments, defining a specific geometric pattern (pattern), for example a raised matrix.

Advantageously, also, or alternatively, the second welding member comprises at least one second welding surface, which is arranged in contact and under pressure relative to the metal connection plate or the tabs of the tab stack, and comprises a knurled surface conformation or inclined linear segments, defining a specific geometric pattern (pattern), for example an opposing raised matrix.

According to some embodiments, the geometric patterns of the first and second surfaces may be identical both in geometry and size of the shapes, or different in geometry or only in dimensional amplitude of the engraved shapes. These variables may be selectively chosen based on the type of welding to be performed, the materials being processed, the thicknesses of the tab stack, or other process-specific factors.

According to another aspect of the present invention, the apparatus may comprise at least one auxiliary laser welding member arranged downstream of the first and second welding members, which is configured to perform a specific weld bead on the tab stack, for example in a final-welding phase.

According to a further aspect of the present invention, the apparatus may comprise at least one cleaning member arranged in association with the first and/or second welding member, which is configured to remove welding residues from the first and/or second surface of the welding sonotrodes.

With reference to the embodiments shown in the accompanying figures, an apparatus 10 according to the present invention is used for the selective welding of a plurality of single cells 150 intended to be arranged in stacks 112 to define a respective conductive cell 100, and is arranged in the final part of a larger plant for the production of such cells 100 used, typically, for the production of electrical energy storage devices, or batteries, such as those known as prismatic or "pouch" batteries.

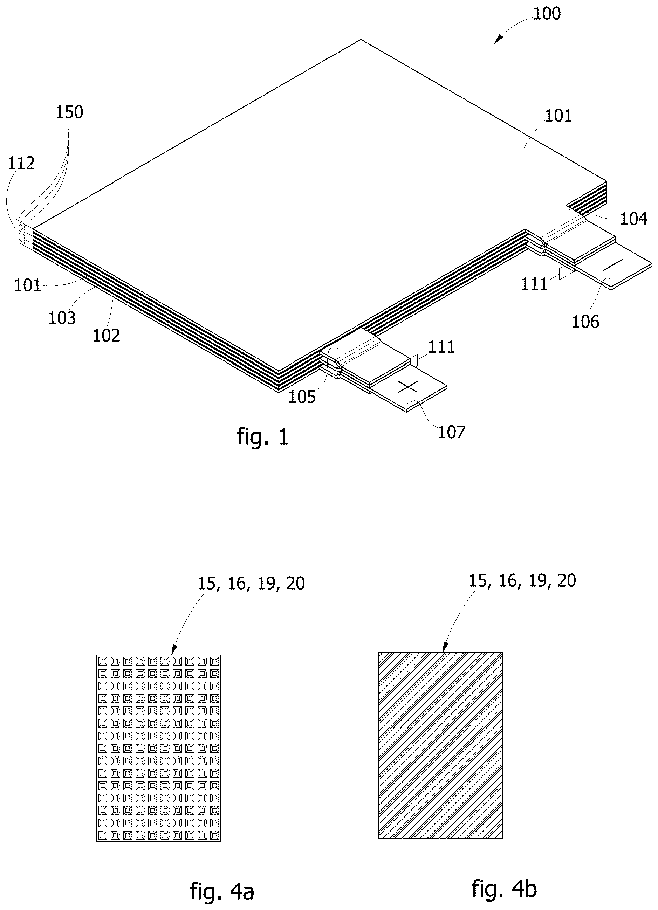

With reference to fig. 1, each cell 100 may substantially comprise a plurality of sequences of single cells 150 each formed by a separator layer 103 made of dielectric or insulating material, an anode 101, another separator layer 103 and a cathode 102.

Both the anode 101 and the cathode 102 comprise respective metal tabs 104 and, respectively, 105, protruding from one side and positioned so as to be staggered relative to each other in the stacked condition 112 of the respective anode 101 and cathode 102. This reciprocal positioning condition allows defining respective tab stacks 111 composed, each, of tabs 104 or 105 of the same material.

Each tab stack 111 also comprises a respective connection plate 106 or 107, made of material coordinated with the anode 101 or cathode 103, so as to represent, in use, the positive cathode or negative anode connection pole of the battery pack thus formed.

By way of example only, in the accompanying figures, the connection plate 106 or 107 is arranged in an intermediate position, i.e., included in height between the respective tabs 104 or 105, to better understand the overall composition of what is defined as the tab stack 111. However, the possibility of a different relative arrangement between the tabs 104 or 105 and the respective connection plate 106 or 107 is not excluded, for example with the latter arranged below or above the tabs 104 or 105, relative to the height of the tab stack 111 itself.

At the end of the production cycle, each tab stack 111, including the respective tabs 104 or 105 and the respective support plates 106 or 107, is finally welded together to concretize, also mechanically and irreversibly, the connection between tabs 104 or 105 and the respective support plates 106 or 107, so as to make them available for common electrical connection to respective utilization circuits.

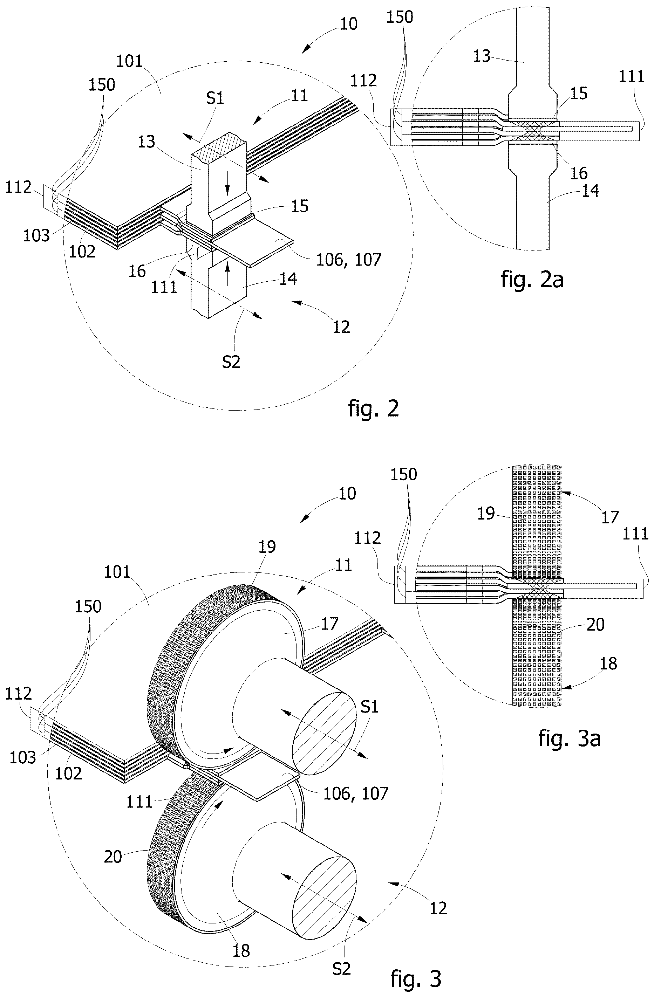

With reference to the embodiment illustrated in fig. 2, the apparatus 10 according to the present invention comprises at least one first ultrasonic welding member 11 and one second ultrasonic welding member 12, operatively arranged in opposition to each other, specifically above and below, relative to the tab stacks 11 to be welded.

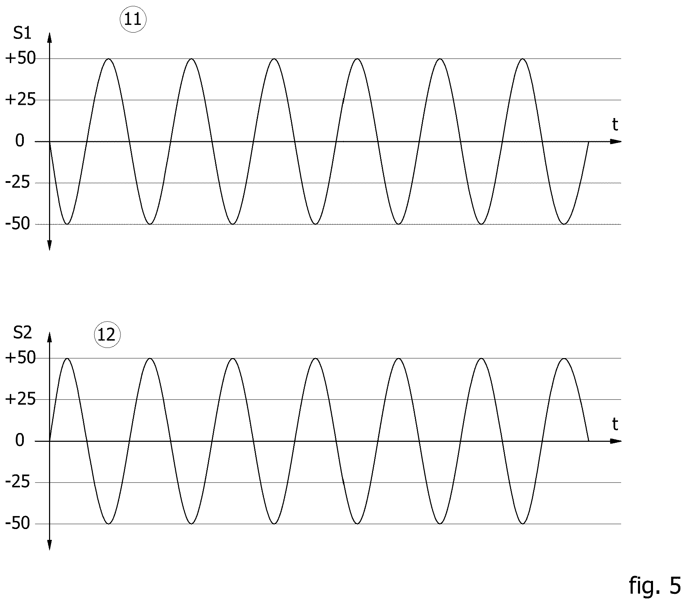

Specifically, both the first and second welding members 11 and 12 comprise a respective upper sonotrode 13 and, respectively, lower sonotrode 14 configured, each, to emit ultrasound with synchronous frequency and in counterphase, as will be explained in detail below with reference to fig. 5.

Each sonotrode 13 and 14 comprises a respective welding surface 15 and 16, arranged in contact and under pressure relative to the respective tab stack 111, and comprising a knurled surface conformation (fig. 4a) defining a specific geometric pattern, in the illustrated case a raised matrix. In the embodiment illustrated in fig. 4b, the welding surface 15 and 16 may have a different surface conformation, for example with linear grooves, parallel and inclined at 45° relative to the operating direction. However, a plurality of other embodiments, i.e., profiles, different and not illustrated, are not excluded, chosen based on the specific welding characteristics and quality to be achieved.

This profile, together with the movement frequency and the pressure exerted by each sonotrode 13 and 14, amplifies the sonic-mechanical energy effect, achieving the desired welding effect.

Although not specifically illustrated, it falls within the scope of the present invention to provide profiles with geometric patterns differing both in geometry and size, also different between the two sonotrodes 13 and 14, depending on the type of welding to be performed, the materials being processed, the thicknesses of the tab stack 111, or other factors.

From an operational standpoint, each sonotrode 13 and 14 performs a repeated oscillatory movement along respective oscillation axes S1 and S2, at a frequency between approximately 20kHz and 35kHz, so that the sonic tuning of each sonotrode 13 or 14 can determine a high amplitude value and an axial expansion mode capable of producing high-frequency impacts over the entire contact area with the tab stack 111, which coincides with the welding surface 15 or 16 of the sonotrode 13 or 14. In the solution according to the present invention, the clamping of the tab stack 111 occurs between the welding surfaces 15 or 16 of the two sonotrodes 13 or 14, which act simultaneously in opposing configuration.

As can be seen from the schematic representation in fig. 2a, the simultaneous opposing action of the two sonotrodes 13 and 14 allows transferring a quantity of sonic/mechanical energy from both sides of the tab stack 111 (represented with a mesh pattern), as mentioned including the respective tabs 104 or 105 and the respective support plates 106 or 107, so that energy diffusion occurs in a shorter time and, above all, more homogeneously compared to known systems.

With reference to the embodiment illustrated in fig. 3, the apparatus 10 provides that the two welding members 11 and 12, operatively arranged in opposition to each other, each comprise a respective upper rotary sonotrode 17 and, respectively, lower rotary sonotrode 18, each configured to emit ultrasound with synchronous frequency and in counterphase, as will be explained in detail below with reference to fig. 5.

Each rotary sonotrode 17 and 18 comprises a respective circular welding surface 19 and 20, arranged in contact and under pressure relative to the respective tab stack 111, and having a knurled or linear surface conformation (figs. 4a and 4b) defining a specific raised matrix geometric pattern, serving the same purposes expressed for the embodiment illustrated in fig. 2.

In this embodiment as well, each rotary sonotrode 17 and 18 performs a repeated oscillatory movement along respective oscillation axes S1 and S2, at a frequency between approximately 20kHz and approximately 35kHz, so as to determine a high amplitude value and high frequency over the entire contact area with the tab stack 111, which coincides with the circular welding surface 19 or 20 of the sonotrode 17 or 18.

In the solution according to the present invention, the clamping of the tab stack 111 occurs between the welding surfaces 15 or 16 of the two sonotrodes 13 or 14, which act simultaneously in opposing configuration.

Being of rotary type, the two opposing rotary sonotrodes 17 and 18 rotate at a reciprocal peripheral speed equal to that of the advancement of the single cells 100, reducing the amount of energy employed by virtue of the decrease in the active welding area on the tab stack 111. This solution also enables the possibility of performing substantially continuous welding of the tab stack 111, which can be fed or moved by the simultaneous rotation of the two opposing rotary sonotrodes 17 and 18.

As can be seen from the schematic representation in fig. 3a, the simultaneous opposing action of the two rotary sonotrodes 17 and 18 allows transferring a quantity of sonic/mechanical energy from both sides of the tab stack 111 (represented with a mesh pattern), so that energy diffusion occurs in a shorter time and, above all, more homogeneously compared to known systems.

As can be seen from the comparison of the graphs in fig. 5, each sonotrode 13 or 14, or rotary sonotrode 17 or 18, acts with synchronous oscillation and in counterphase relative to the other, working in amplitude intervals that can reach up to 100 $\mu$m with a 180° phase shift between them, so as to instantaneously achieve simultaneous rubbing between the tabs 104 or 105 of the interposed tab stacks 111. The counterphase configuration avoids resonance phenomena between the two sonotrodes 13 and 14, or rotary sonotrodes 17 or 18, and ensures maximum sliding amplitude between the tab stacks of tabs 104 or 105.

From the graphs, it can be inferred that with a counterphase frequency, the amplitude factor is double that of traditional single systems. Energy diffusion thus occurs in a shorter time and more homogeneously compared to standard systems typically in use today.

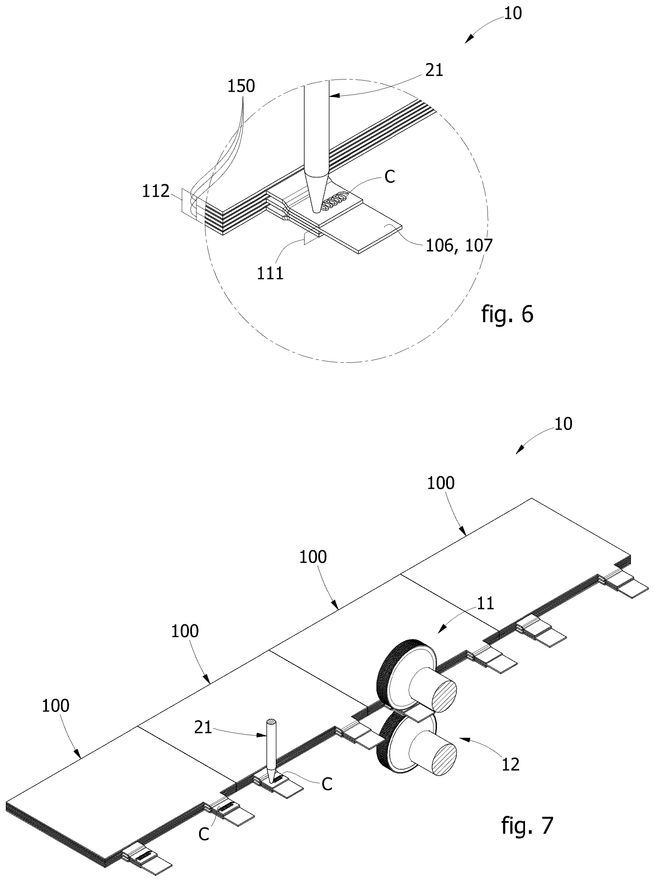

With reference to figures 6 and 7, the apparatus 10 according to the present invention may also provide for final welding of the tab stack 111. Indeed, an auxiliary laser welding member 21 is provided, arranged downstream of the first and second welding members 11 and 12, which is configured to perform a specific weld bead C on the tab stack 111.

Advantageously, the auxiliary welding member 21 employs CW (Continuous Wave) fiber laser technology with a wavelength between approximately 1050nm and approximately 1064nm, for example proposed with dual-beam mode which, together with the weld bead C production process, enables high-quality welding, free from thermally altered zones and weld spatter in the treated area.

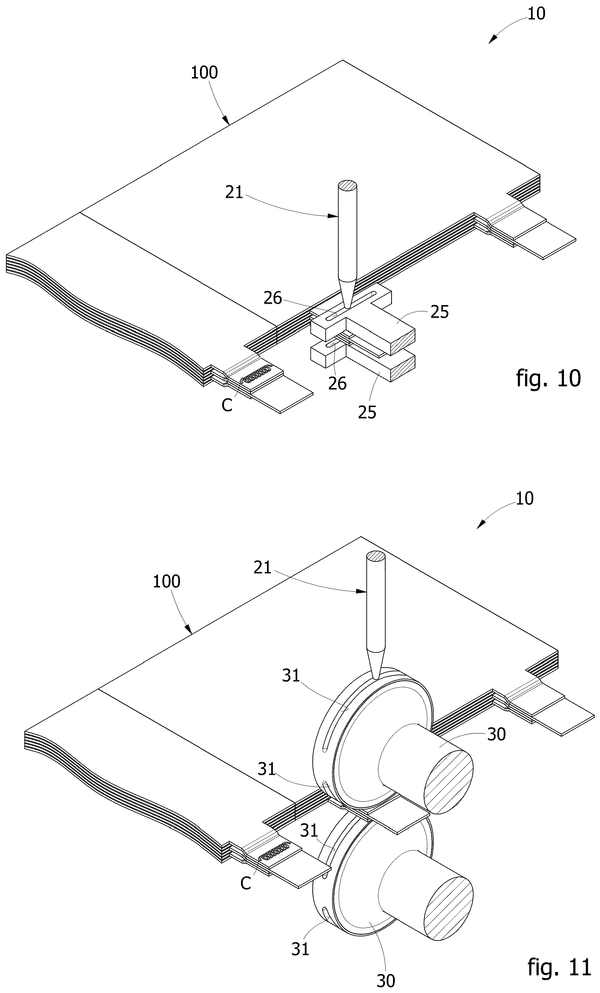

With particular reference to the embodiments schematized in figures 10 and 11, the clamping of the tab stack 111 during laser welding can be achieved with a solution where two generic clamping members (25 and 30) are provided, opposed in height relative to the tab stack 111 and arranged to perform a simultaneous mechanical clamping action on the tab stack 111 itself.

In particular, in the solution illustrated in fig. 10, the clamping members comprise two clamping plates 25, each provided with a through slot 26, through which the auxiliary laser welding member 21 can operatively reach the tabs 104 or 105, or the respective support plates 106 or 107, to produce the weld bead C.

In the solution illustrated in fig. 11, the clamping members comprise two rotating clamping drums 30, each provided with a through slot 31, through which the auxiliary laser welding member 21 can operatively reach the tabs 104 or 105, or the respective support plates 106 or 107, to produce the weld bead C. In this solution, the slots 31 are angularly phased relative to each other to allow diametric passage of the laser through the respective clamping drum 30.

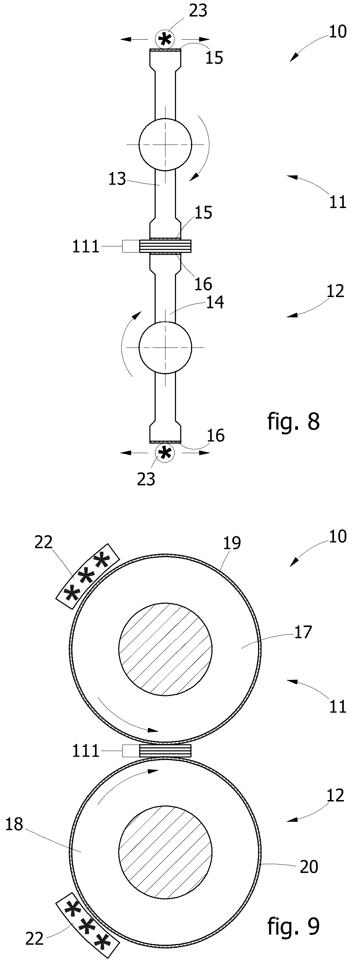

With reference to the variant in figure 8, cleaning members 23, for example rotating brushes, are associated with each linear sonotrode 13 and 14, particularly in cooperation with the respective welding surfaces 15 and 16. These cleaning members are linearly movable and perform a mechanical action to remove welding residues from the welding surfaces 15 and 16 not temporarily involved in the welding action. Indeed, these linear sonotrodes 13 and 14 have opposing welding surfaces 15 and 16 and are selectively rotatable, for example by 180°, to alternately subject these welding surfaces 15 and 16 to welding action and cleaning, thereby avoiding undesirable residual contamination during successive weldings. This also enables substantially uninterrupted operational continuity, benefiting the welding machine's productivity.

With reference to the variant in figure 9, cleaning members 22, for example rotating brushes, are associated with each rotary sonotrode 17 and 18, particularly in cooperation with the respective circular welding surfaces 19 and 20. These perform a mechanical action to remove welding residues from the circular welding surfaces 19 and 20, thereby avoiding undesirable residual contamination during successive weldings.

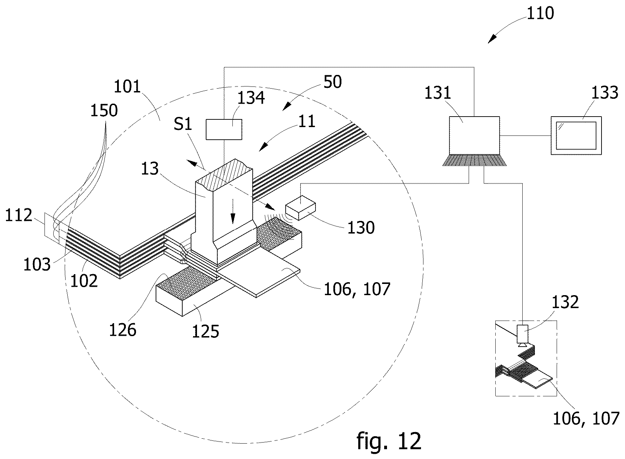

In Figures 12-14, a control device 110 is illustrated according to an embodiment of the present invention. The control device 110 is applied to a welding apparatus 50 for the selective welding of a plurality of single cells 150 intended to be arranged in stacks 112 to define a respective conductive cell 100.

The welding apparatus 50 is arranged at the end of a plant for producing such cells 100, typically used for manufacturing electrical energy storage devices, or batteries, such as those known as prismatic, "pouch", Z folding, cylindrical, or similar batteries.

With reference to fig. 12, the control device 110 is applied to a welding apparatus 50 comprising a first ultrasonic welding member 11, provided with an upper sonotrode 13 operatively opposed to a support plane, or anvil 125, on which the tab stacks 111 to be welded are positioned. Typically, the anvil 125 comprises a welding surface 126 having a knurled surface conformation, with lines or inclined segments defining a specific geometric pattern.

Briefly, the upper sonotrode 13 performs a repeated oscillatory movement along a respective oscillation axis V1 at a frequency between approximately 20kHz and approximately 35kHz, so as to determine an ultrasonic frequency with high amplitude value and a transverse expansion mode capable of producing high-frequency sliding/rubbing over the entire contact area with the tab stack 111, which coincides with the welding surface 126 of the anvil 125.

Specifically, the control device 110 substantially comprises a sensor member, or acoustic sensor 130, which is arranged near the upper sonotrode 13, substantially corresponding to the area where welding occurs, and is of the type capable of dynamically detecting desired acoustic parameters resulting from the operating frequency of the ultrasound emitted by the upper sonotrode 13 during its operation.

Some examples of the acoustic sensor 130 may be implemented as known membrane-type sensors or, advantageously, as laser acoustic microphones.

Similarly, this solution can also find effective application in controlling notching cutting processes (laser or mechanical) and laser tab welding. Indeed, in general terms, the same principle applied in ultrasonic welding processes can also apply to these procedures, as it is necessary to characterize the cutting or laser welding process, acquire its acoustic signature, and through induced spectrum modulation tests, define the minimum and maximum limits of the specific process to be controlled.

In the exemplary solution illustrated, the control device 110 further comprises a processing unit 131, detection means such as a camera 132, or other vision system, or electrical contact resistance measurement sensors, signaling means, specifically a monitor 133, and adjustment means 134.

The processing unit 131 can be selected among a CPU, PLC, or other known processing systems, and is electronically connected to both the acoustic sensor 130, the camera 132, the monitor 133, and the adjustment means 134. The processing unit 131 is configured to process the acoustic parameters detected by the acoustic sensor 130 and compare them with an optimal acoustic signature, based on the type of welding to be achieved.

The processing unit 131 may include a calculation system that utilizes artificial intelligence resources to process the acoustic parameters, comparing them with an optimal acoustic signature, based on the type of welding to be achieved.

By electronic connection, a generic functional connection is intended for the transmission of data in electronic format, whether physically implemented via cables, wirelessly, via radio, Wi-Fi, or other technology.

The camera 132 can be of the type designed to capture static or dynamic images, or of the X-ray, thermal, or other known and suitable type. The camera 132 is positioned downstream of the welding member 11, along the production cycle direction, to capture images of the ultrasonic welds performed and identify desired qualitative parameters of the ultrasonic welding itself. The electronic connection of the electrical resistance sensor or camera 132 to the processing unit 131 allows direct transmission of the captured images for immediate comparison with nominal qualitative parameters, assessing any degree of conformity.

The results of the processing performed by the processing unit 131 are displayed on the monitor 133, providing the operator with indications about the quality of the performed operations and enabling appropriate corrective actions.

The monitor 133 can be replaced by a simple buzzer, an intermittent light signal, or combinations thereof, so that, based on coded signaling sequences, specific information can be communicated to the operator.

The adjustment means 134 are electronically connected to both the processing unit 131, to receive a specific intervention signal, and to the power generator(s) of the upper sonotrode 13, to vary its acoustic power, such as frequency, amplitude, force, power, energy, and operating time, and thus the sonic energy conditions used for welding. In this way, based on the actual results of previous welds, the operating parameters of the upper sonotrode 13 are automatically or semi-automatically adjusted to optimize its performance according to the required quality.

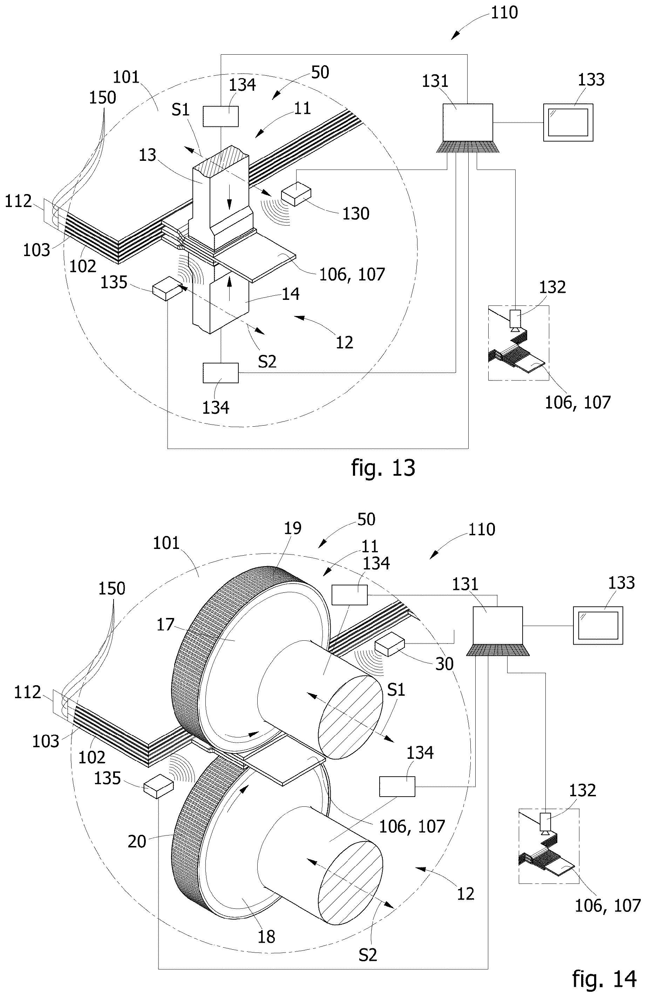

With reference to Figures 13 and 14, the control device 10 is applied to a welding apparatus 50 comprising both a first ultrasonic welding member 11 and a second ultrasonic welding member 12, operatively arranged in opposition to each other, specifically above and below, relative to the tab stacks 111 to be welded.

In Fig. 13, both the first and second welding members 11 and 12 comprise a respective upper sonotrode 13 and, respectively, lower sonotrode 14, each configured to emit ultrasound with synchronous frequency and in counterphase.

From an operational standpoint, each sonotrode 13 and 14 performs a repeated oscillatory movement along respective oscillation axes V1 and V2, at a frequency between approximately 20kHz and approximately 35kHz, so that the sonic tuning of each sonotrode 13 or 14 can determine an ultrasonic frequency with a high amplitude value and a transverse expansion mode capable of producing relative sliding/rubbing at high frequency over the entire contact area with the tab stack 111. In the solution according to the present invention, the clamping of the tab stack 111 occurs between the two sonotrodes 13 or 14, which act simultaneously in opposing configuration.

Specifically, the control device 110 substantially comprises a first sensor member, or acoustic sensor 130, positioned near the upper sonotrode 13, and optionally a second sensor member, or acoustic sensor 135, positioned near the lower sonotrode 14. Both acoustic sensors 130 and 135 are positioned substantially at the welding area and are capable of dynamically detecting desired acoustic parameters derived from the operating frequency of the ultrasound emitted by the respective sonotrode 13 or 14 during their operation.

As in the previous solution, the control device 110 substantially comprises a processing unit 131, a contact sensor or camera 132, a monitor 133, and, specifically, two adjustment means 134, each electronically connected to a respective one of the two opposing sonotrodes 13 and 14, enabling individual intervention on each and further enhancing the operational control capabilities of the control device 110.

With reference to Fig. 14, the control device 110 provides that the two welding members 11 and 12, operatively arranged in opposition to each other, each comprise a respective upper rotary sonotrode 17 and, respectively, lower rotary sonotrode 18, each configured to emit ultrasound with synchronous frequency and in counterphase, as in the solution of Fig. 13.

In this case as well, the control device 110 substantially comprises a first acoustic sensor 130 positioned near the upper rotary sonotrode 17 and a second acoustic sensor 135 positioned near the lower rotary sonotrode 18, to dynamically detect desired acoustic parameters derived from the operating frequency of the ultrasound emitted by the respective rotary sonotrode 17 or 18 during their operation.

As in the previous solutions, the control device 110 according to the present invention substantially comprises a processing unit 131, a contact sensor or camera 132, a monitor 133, and, specifically, two adjustment means 134, each electronically connected to a respective one of the two rotary sonotrodes 17 and 18.

In summary, Figures 12-14 describe a control device for a welding apparatus 50 for welding single cells 150 stacked together to define a conductive cell 100 for the production of electrical energy storage devices, wherein the welding apparatus 50 comprises at least one first ultrasonic welding member 11, operatively associated with at least one first electrode 101 and/or one second electrode 102 of a single cell 150. The device is characterized by comprising at least one first acoustic-type sensor member 130, configured to detect acoustic parameters derived from the operating frequency spectrum of the ultrasound emitted by the first welding member 11.

The control device can be applied to a welding apparatus 50 that also comprises a second ultrasonic welding member 12, operatively arranged in opposition to the first welding member 11. The two welding members 11 and 12 are each configured to emit ultrasound in counterphase relative to the other. The device further comprises at least one second acoustic-type sensor member 135, configured to detect acoustic parameters derived from the operating frequency of the ultrasound emitted by the second welding member 12.

The device may comprise at least one processing unit 131 configured to process the detected acoustic parameters, comparing them with an optimal acoustic signature, based on the type of welding to be achieved.

It may be provided that the device also comprises detection means 132 electronically connected to the processing unit 131, configured to detect desired operational and qualitative parameters of the ultrasonic welding and to send these parameters to the processing unit 131.

Such detection means 132 can be of the contact or non-contact type.

The device may further comprise signaling means 133 electronically connected to the processing unit 131, configured to signal to a user the results of the comparison processed by the processing unit 131.

Such signaling means 133 can be of the optical or acoustic type.

The device may also include adjustment means 134 electronically connected to the processing unit 131, configured to selectively adjust typical acoustic parameters of the system, such as frequency, amplitude, force, time, power or energy, as well as the operational frequency spectrum of the ultrasound emitted by the welding members, based on the comparison results processed by the processing unit 31.

In some configurations, the processing unit 131 may comprise a computing system utilizing artificial intelligence resources to process in real-time and in closed loop the acoustic parameters, comparing them with an optimal acoustic fingerprint, depending on the type of welding to be achieved.

Also provided is a control method for a welding apparatus 50 for welding single cells 150 stacked together to define a conductive cell 100 for the production of electrical energy storage devices, which includes at least one phase wherein an acoustic-type sensor member 130 detects acoustic parameters derived from the operational frequency spectrum of the ultrasound emitted by at least one first ultrasonic welding member 11, operatively arranged in association with a first electrode 101 and/or a second electrode 102 components of each single cell 150.

Naturally, while maintaining the principle of the invention, the construction details and embodiments may be widely varied without thereby departing from the scope of the invention as defined by the following claims.

**Claims**

1. A welding apparatus for welding single cells (150) stacked together to define a conductive cell (100) for the production of electrical energy storage devices, each single cell (150) comprising at least one first electrode (101), one second electrode (102) and at least one separator film (103), **characterized in that** it comprises at least one first ultrasonic welding member (11) and a second ultrasonic welding member (12) opposed to each other and each configured to emit ultrasound in counterphase relative to the other.

2. The apparatus of claim 1, wherein at least said first welding member (11) comprises a first sonotrode of linear type (13), or of rotary type (17).

3. The apparatus of claim 1 or claim 2, wherein at least said second welding member (12) comprises a second sonotrode of linear type (14), or of rotary type (18).

4. The apparatus of any of the preceding claims, wherein at least said first welding member (11) comprises at least one first welding surface (19) defining a specific geometric pattern.

5. The apparatus of any of the preceding claims, wherein at least said second welding member (12) comprises at least one second welding surface (20) comprising a surface conformation defining a specific geometric pattern.

6. The apparatus of claim 4 and claim 5, wherein said geometric pattern provided on said first welding surface (19) is different from said geometric pattern provided on said second welding surface (20).

7. The apparatus of any of the preceding claims, comprising at least one auxiliary laser welding member (21) disposed downstream of said first welding member (11) and said second welding member (12).

8. The apparatus of any of the preceding claims from 5 onwards, comprising at least one cleaning member (22) arranged in association with said first welding member (11) and/or said second welding member (12).

9. A method for welding single cells (150) stacked together to define a conductive cell (100) for the production of electrical energy storage devices, each single cell (150) comprising at least one first electrode (101), one second electrode (102) and at least one separator film (103), **characterized in that** it comprises at least one welding phase by a first ultrasonic welding member (11) and a second ultrasonic welding member (12) opposed to each other and each configured to emit ultrasound in counterphase relative to the other.

10. The method of claim 9, comprising at least one final welding phase by an auxiliary laser welding member (22) disposed downstream of said first welding member (11) and said second welding member (12).

fig. 1

fig. 4a

fig. 4b

fig. 2a

fig. 2

fig. 3a

fig. 3

fig. 5

fig. 6

fig. 7

fig. 8

fig. 9

fig. 10

fig. 11

fig. 12

fig. 13

fig. 14

Europäisches
Patentamt
European
Patent Office
Office européen
des brevets

# EUROPEAN SEARCH REPORT

**Application Number**

EP 25 21 4935

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 458 479 A1 (SBT ULTRASONIC TECH CO LTD [CN]) 6 November 2024 (2024-11-06) | 1-6,9 | INV.<br>B23K20/10 |
| Y | * fig. 1, par. 2, 5, 53 * | 7,8,10 | H01M50/103<br>H01M50/105 |
| A | CN 115 732 865 A (HEFEI GUOXUAN HIGH TECH POWER ENERGY CO LTD) 3 March 2023 (2023-03-03) * fig. 3, claim 5 * | 2,3 | H01M50/566<br>B23K20/26<br>H01M50/536 |
| A | US 4 975 133 A (GOCHERMANN HANS [DE]) 4 December 1990 (1990-12-04) * fig. 4-5 * | 2,3 | |
| A | JP 2014 104493 A (PRIMEARTH EV ENERGY CO LTD) 9 June 2014 (2014-06-09) * the whole document * | 4,6 | |
| Y | CN 214 291 366 U (ABMSMART CO LTD) 28 September 2021 (2021-09-28) * claim 1, fig. 1 * | 8 | |
| Y | CN 113 967 782 A (KUNSHAN JOUTUR NEW ENERGY TECH CO LTD) 25 January 2022 (2022-01-25) * fig. 1-5, claims 1-10 * | 8 | **TECHNICAL FIELDS SEARCHED (IPC)**<br><br>B23K<br>H01M |
| Y | US 2022/048129 A1 (BÖHM DENNIS [DE] ET AL) 17 February 2022 (2022-02-17) * par. 13; claim 7; fig. 1, 4a * | 7,10 | |

The present search report has been drawn up for all claims

| Place of search | Date of completion of the search | Examiner |
|---|---|---|
| Munich | 27 March 2026 | Hernanz, Sonsoles |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.................................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 21 4935

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2026

| Patent document cited in search report | | Publication date | Patent family member(s) | | Publication date |
|---|---|---|---|---|---|
| EP 4458479 | A1 | 06-11-2024 | CN | 114290685 A | 08-04-2022 |
| | | | EP | 4458479 A1 | 06-11-2024 |
| | | | WO | 2023123678 A1 | 06-07-2023 |
| CN 115732865 | A | 03-03-2023 | NONE | | |
| US 4975133 | A | 04-12-1990 | DE | 3147255 A1 | 23-06-1983 |
| | | | FR | 2517232 A1 | 03-06-1983 |
| | | | US | 4975133 A | 04-12-1990 |
| JP 2014104493 | A | 09-06-2014 | CN | 103852040 A | 11-06-2014 |
| | | | JP | 5795300 B2 | 14-10-2015 |
| | | | JP | 2014104493 A | 09-06-2014 |
| CN 214291366 | U | 28-09-2021 | NONE | | |
| CN 113967782 | A | 25-01-2022 | NONE | | |
| US 2022048129 | A1 | 17-02-2022 | CN | 113165103 A | 23-07-2021 |
| | | | DE | 102018221843 A1 | 18-06-2020 |
| | | | EP | 3894126 A1 | 20-10-2021 |
| | | | US | 2022048129 A1 | 17-02-2022 |
| | | | WO | 2020120726 A1 | 18-06-2020 |

EPO FORM P0459

For more details about this annex : see Official Journal of the European Patent Office, No. 12/82